# EUROPÄISCHE PATENTSCHRIFT

(11) **EP 2 239 400 B1**
(45) Veröffentlichungstag und Bekanntmachung des Hinweises auf die Patenterteilung: **05.09.2018**
(21) Anmeldenummer: 10003760.5
(22) Anmeldetag: 08.04.2010
(51) Int. Cl.: G07C 9/00, E05B 19/04, E05B 19/00, B60R 25/00

(54) **Schlüssel für ein Kraftfahrzeug**
Key for a motor vehicle
Clé pour un véhicule automobile

(30) Priorität: 08.04.2009 DE 102009016786; 08.04.2009 DE 102009016973
(43) Veröffentlichungstag der Anmeldung: 13.10.2010
(73) Patentinhaber: Marquardt GmbH, 78604 Rietheim-Weilheim (DE)
(72) Erfinder: Schulz, Max, 78628 Rottweil (DE); Reckermann, Matthias, 78673 Wurmlingen (DE)
(74) Vertreter: Otten, Roth, Dobler & Partner mbB Patentanwälte

(56) Entgegenhaltungen:
- EP-A1- 1 429 294
- EP-A1- 2 014 523
- CH-A- 460 127
- DE-A1- 19 824 510
- DE-C1- 3 706 307
- JP-A- 2002 161 519
- US-A- 5 959 540

## Beschreibung

Die Erfindung betrifft einen Schlüssel nach dem Oberbegriff des Patentanspruchs 1.

Schlüssel, die zur Betätigung eines Schlosses dienen, können als mechanischer und/oder elektronischer Schlüssel ausgestaltet sein. Insbesondere für Schließsysteme bei Kraftfahrzeugen, beispielsweise einer Zentralverriegelung für die Autotüren eines PKW's oder eines LKW's, werden elektronische Schlüssel verwendet, die in der Art einer Fernbedienung arbeiten. Ein solcher elektronischer Schlüssel kann auch zur Betätigung eines elektronischen Zündschlosses für das Fahrzeug dienen.

Es ist ein elektronischer Schlüssel mit einem Gehäuse bekannt, der zur Betätigung der Zugangs- und/oder Fahrberechtigung für ein Kraftfahrzeug dient. Zur Spannungsversorgung der Elektronik des Schlüssels befindet sich im Gehäuse eine Batterie. Zum Wechsel der Batterie weist das Gehäuse eine Öffnung als Zugang zum Gehäuseinneren auf. Am Gehäuse ist ein abnehmbarer Verschluss befestigt, derart dass die Öffnung am Gehäuse mittels des Verschlusses verschließbar ist. Es kann jedoch vorkommen, dass der Benutzer das Wiederanbringen des Verschlusses nach einem Batteriewechsel vergisst. Ebenso kann es passieren, dass der Verschluss nach dem Batteriewechsel nicht korrekt am Gehäuse befestigt wird. In diesen Fällen besteht die Gefahr, dass schädliche Einflüsse, wie Feuchtigkeit, Staub o. dgl., in das Gehäuseinnere einwirken und dabei die Elektronik beschädigen.

Aus der DE 44 44 913 A1 ist ein elektronischer Schlüssel mit einem Gehäuse bekannt, der zusätzlich einen mechanischen Schlüssel zur Betätigung eines mechanischen Schlosses aufweist. Beispielsweise kann das mechanische Sohloss an der Autotüre angeordnet sein, um im Falle einer leeren Batterie des elektronischen Schlüssels dem Benutzer mit Hilfe des mechanischen Schlüssels als Notschlüssel Zugang zum Kraftfahrzeug zu ermöglichen. Es ist jedoch auch denkbar, dass der mechanische Schlüssel zur Betätigung eines sonstigen mechanischen Schlosses, beispielsweise eines Tankschlosses am Kraftfahrzeug, dient. Der mechanische Schlüssel ist im Gehäuse aufnehmbar. Und zwar befindet sich im Gehäuse des Schlüssels eine Aufnahme für den mechanischen Schlüssel, wobei der mechanische Schlüssel an einer Öffnung im Gehäuse in die Aufnahme einsteckbar sowie aus dem Gehäuse herausnehmbar ist.

Zur Betätigung des mechanischen Schlosses wird der mechanische Schlüssel also aus der Aufnahme entnommen und nach Gebrauch wieder in die Aufnahme am Gehäuse eingesteckt. Es kann jedoch vorkommen, dass der Benutzer das Wiedereinstecken vergisst. In diesem Fall besteht die Gefahr, dass der mechanische Schlüssel verloren geht.

Diese bekannten Schlüssel umfassen somit ein Gehäuse mit einem im Gehäuse aufnehmbaren und/oder am Gehäuse befestigbaren sowie abnehmbaren Schlüsselteil.

Ein solcher Schlüssel mit abnehmbaren Schlüsselteilen ist auch aus der EP 1 429 294 A1 bekannt, wobei im Gehäuse mit dem Schlüsselteil zusammenwirkende Mittel zur Detektion der Anwesenheit und/oder Befestigung des Schlüsselteils im und/oder am Gehäuse angeordnet sind. Mit Hilfe dieser Mittel ist somit eine Abfrage des Schlüsselteils realisiert, die dem Benutzer die An- und/oder Abwesenheit des Schlüsselteils signalisiert. Bei dem Schlüsselteil kann es sich um einen mechanischen Schlüssel zur Betätigung eines mechanischen Schlosses handeln, wobei der mechanische Schlüssel im Gehäuse aufnehmbar sowie herausnehmbar ist. Weiter kann es sich bei dem Schlüsselteil um den Verschluss handeln, wobei eine am Gehäuse befindliche Öffnung mittels eines am Gehäuse befestigbaren sowie abnehmbaren Verschlusses verschließbar ist. Im Gehäuse sind mit dem Verschluss zusammenwirkende Mittel zur Detektion der Anwesenheit und/oder der Befestigung des Verschlusses am Gehäuse angeordnet. Bei nicht im Gehäuse befindlichen mechanischen Schlüssel oder bei nicht am Gehäuse befindlichen Verschluss ist ein Hinweis für den Benutzer erzeugbar.

Ein ebensolcher elektronischer Schlüssel ist auch in der EP 2 014 523 A1 beschrieben.

Der Erfindung liegt die Aufgabe zugrunde, die Mittel zur Erkennung für das Fehlen des Schlüsselteils im und/oder am Gehäuse weiterzubilden.

Diese Aufgabe wird bei einem gattungsgemäßen Schlüssel durch die kennzeichnenden Merkmale des Anspruchs 1 gelöst.

Weitere Ausgestaltungen der Erfindung sind Gegenstand der Unteransprüche.

Im Gehäuse sind mit dem mechanischen Schlüssel zusammenwirkende Mittel zur Detektion der Anwesenheit des mechanischen Schlüssels im Gehäuse angeordnet. Mit Hilfe dieser Mittel ist somit eine Abfrage des mechanischen Schlüssels realisiert, die dem Benutzer die An- und/oder Abwesenheit des mechanischen Schlüssels signalisiert. Insbesondere ist die Abfrage eines mechanischen Notschlüssels, Tankschlüssels o. dgl. im elektronischen Schlüssel geschaffen.

Mit Hilfe dieser Mittel ist somit eine Abfrage des Verschlusses realisiert, die dem Benutzer die An- und/oder Abwesenheit des Verschlusses und/oder die korrekte bzw. unkorrekte Befestigung des Verschlusses am Gehäuse signalisiert. Insbesondere ist die Abfrage eines Verschlusses für das Gehäuse des elektronischen Schlüssels geschaffen.

Bei diesen Ausgestaltungen ist somit die Abfrage des Verschlusses sowie die Abfrage des mechanischen Schlüssels realisiert, um den Benutzer auf das Fehlen des mechanischen Schlüssels und/oder auch auf das Fehlen des Verschlusses hinzuweisen.

Wie bereits erwähnt kann im Gehäuse eine Aufnahme für den mechanischen Schlüssel befindlich sein, wobei der mechanische Schlüssel beispielsweise an der der Aufnahme zugeordneten Öffnung im Gehäuse in die Aufnahme einsteckbar ist. Zweckmäßigerweise ist der mechanische Schlüssel am Verschluss herausnehmbar angeordnet. In diesem Fall dienen die Mittel zur Detektion des mechanischen Schlüssels dazu, die Anwesenheit des mechanischen Schlüssels in der Aufnahme bzw. am Verschluss oder dessen Abwesenheit festzustellen.

In einer einfachen und dennoch sehr wirkungsvollen Ausgestaltung ist der mechanische Schlüssel ferromagnetisch ausgebildet, indem der Schlüsselbart des mechanischen Schlüssels aus einem ferromagnetischen Material besteht. Zweckmäßigerweise bestehen die Mittel zur Detektion des mechanischen Schlüssels aus einem Magneten sowie einem Magnet-Sensor, In einer einfach zu montierenden Anordnung ist der Magnet im Gehäuse befindlich und im Gehäuse ist eine Leiterplatte zur Aufnahme des Magnet-Sensors angeordnet. Die Leiterplatte dient weiterhin zur Aufnahme der elektronischen Bauteile des elektronischen Schlüssels. Bei Anwesenheit des ferromagnetischen mechanischen Schlüssels in der Aufnahme verändert dieser das vom Permanentmagneten erzeugte Magnetfeld, wobei diese Veränderung wiederum durch den Magnet-Sensor detektiert wird, so dass anhand der Magnetfeldänderung die An- und/oder Abwesenheit des mechanischen Schlüssels bestimmbar ist. Diese Anordnung besitzt im übrigen den weiteren Vorteil, dass der ansonsten unveränderte mechanische Schlüssel wie bisher in handlicher Weise ausgebildet sein kann.

Wie bereits erwähnt kann am Gehäuse ein am Gehäuse befestigbarer sowie abnehmbarer Verschluss für die Aufnahme angeordnet sein. Mittels des Verschlusses ist die der Aufnahme zugeordnete Öffnung am Gehäuse verschließbar. Der mechanische Schlüssel kann am Verschluss befestigt sein und gegebenenfalls herausnehmbar am Verschluss angeordnet sein. Zwecks guter Handhabbarkeit durch den Benutzer ist somit zum Herausnehmen des mechanischen Schlüssels aus der Aufnahme lediglich der Verschluss vom Gehäuse abzuziehen. Wird also der mechanische, ferromagnetische Schlüssel aus dem Verschluss und somit aus dem elektronischen Schlüssel vom Benutzer entfernt, hat dies Auswirkungen auf das Magnetfeld. Diese Auswirkungen werden wiederum vom Magnetsensor erkannt.

Zweckmäßigerweise bestehen die Mittel zur Detektion des Verschlusses aus einem Magneten sowie einem Magnet-Sensor. In einer einfach herzustellenden Anordnung ist der Magnet am Verschluss befindlich. Hierzu kann der Magnet in den Verschluss eingespritzt, in den Verschluss eingelegt o. dgl. sein. Es besteht jedoch auch die Möglichkeit, dass der Verschluss aus magnetisierbarem Kunststoff gespritzt ist, womit der gesamte Verschluss magnetisch ausgebildet ist. Zwecks einfacher Montage ist im Gehäuse eine Leiterplatte zur Aufnahme des Magnet-Sensors angeordnet. Die Leiterplatte dient weiterhin zur Aufnahme der elektronischen Bauteile des elektronischen Schlüssels. Bei Anwesenheit des Verschlusses am Gehäuse wird das vom Permanentmagneten erzeugte Magnetfeld durch den Magnet-Sensor detektiert, so dass anhand dieses Magnetfeldes die An- und/oder Abwesenheit des Verschlusses bestimmbar ist.

Wird am Verschluss ein Magnetfeld erzeugt, so kann dieses gleichzeitig zur Detektion des Verschlusses und des mechanischen Schlüssels verwendet werden. In diesem Fall ist ein weiterer Magnet-Sensor, und zwar bevorzugterweise ein Hall-Sensor, auf der Leiterplatte befindlich, Bei Anwesenheit des ferromagnetisohen mechanischen Schlüssels in der Aufnahme und/oder am Verschluss verändert dieser das vom Permanentmagneten am Verschluss erzeugte Magnetfeld, wobei diese Veränderung durch den weiteren Magnet-Sensor detektiert wird, so dass anhand der Magnetfeldänderung die An- und/oder Abwesenheit des mechanischen Schlüssels in der Aufnahme und/oder am Verschluss bestimmbar ist.

Als Magnetsensor bietet sich ein Hall-Sensor an, welcher zuverlässig und kostengünstig ist. Selbstverständlich kann jedoch auch ein besonders kostengünstiger REED-Schalter o. dgl. als Magnetsensor Verwendung finden. Bei Veränderungen im Magnetfeld erzeugt der Hall-Sensor, REED-Schalter o. dgl. ein entsprechendes Signal, welches wiederum zur schaltenden Einwirkung im gesamten System des elektronischen Schlüssels für die Detektion des Verschlusses und/oder des mechanischen Schlüssels führt.

Desweiteren bietet es sich an, dass bei nicht im Gehäuse, also insbesondere nicht in der Aufnahme und/oder am Verschluss, befindlichen mechanischen Schlüssel und/oder bei nicht am Gehäuse befindlichen Verschluss ein Hinweis für den Benutzer erzeugbar ist. Dieser Hinweis kann beispielsweise ein erklingendes Tonsignal im Schlüssel oder ein aufleuchtendes Licht am Schlüssel sein. Desweiteren kann es sich bei dem Hinweis auch um eine aktivierte Symbolanzeige am Schlüssel, um einen Hinweistext am Schlüssel o. dgl. handeln. Der entsprechende Hinweis kann auf einem Display des Schlüssels ausgegeben werden. Selbstverständlich ist auch denkbar, dass der Hinweis am Armaturenbrett des Kraftfahrzeugs, beispielsweise im Kombiinstrument, ausgegeben wird.

Für eine besonders bevorzugte Ausführung ist nachfolgendes festzustellen. Die Erfindung betrifft einen elektrischen / elektronischen Schlüssel, insbesondere einen Multifunktionsschlüssel, der in einem Kraftfahrzeug (KFZ) eine Verwendung findet. Der Schlüssel besitzt ein Gehäuse, in dem sich ein Magnet sowie eine bestückte Leiterplatte befinden, Desweiteren ist in dem Sohlüssel ein abnehmbarer Verschluss, in dem der herausnehmbare, mechanische Schlüssel integriert ist, vorhanden. Die Leiterplatte in dem Schlüsselgehäuse ist mit einem Hall-Sensor zur schaltenden Einwirkung bestückt. Wird der mechanische, ferromagnetische Schlüssel aus dem Verschluss und somit aus dem elektrischen Schlüssel vom Benutzer entfernt, hat dies eine Auswirkung auf das Magnetfeld, welche vom Hall-Sensor erkannt wird und somit zur schaltenden Einwirkung im System führt. Diese Wirkung kann in unterschiedlicher Form als Hinweis an den Benutzer zurückgegeben werden, indem z.B. ein Tonsignal erklingt, ein Licht aufleuchtet oder auch als ein Hinweis auf dem Display des Schlüssels oder des Armaturenbretts.

Für eine weitere besonders bevorzugte Ausführung ist nachfolgendes festzustellen. Die Erfindung betrifft einen elektrischen / elektronischen Schlüssel, insbesondere einen Multifunktionsschlüssel, der in einem Kraftfahrzeug (KFZ) eine Verwendung findet. Der Schlüssel besitzt ein Gehäuse, in dem sich eine bestückte Leiterplatte befindet. Desweiteren ist in dem Schlüssel ein abnehmbarer Verschluss, in dem ein Magnet sowie ein herausnehmbarer, mechanischer Schlüssel integriert sind, vorhanden. Der Magnet kann in den Verschluss eingespritzt oder auch eingelegt werden. Der Verschluss kann auch aus magnetisierbarem Kunststoff gespritzt werden. Die Leiterplatte in dem Schlüsselgehäuse ist mit zwei Hall-Sensoren zur schaltenden Einwirkung bestückt. Anstatt des Hallsensors kann für die Abfrage des Verschlusses auch ein REED-Schalter verwendet werden. Wird der mechanische, ferromagnetische Schlüssel aus dem Verschluss und somit aus dem elektrischen Schlüssel vom Benutzer entfernt, hat das eine Auswirkung auf das Magnetfeld, welche vom Hall-Sensor erkannt wird und somit zur schaltenden Einwirkung im System führt. Diese Wirkung kann in unterschiedlicher Form als Hinweis an den Benutzer zurückgegeben werden, indem z.B. ein Tonsignal erklingt, ein Licht aufleuchtet oder auch als ein Hinweis auf dem Display des Schlüssels oder auch des Armaturenbretts. Wird der Verschluss von dem elektronischen Schlüssel entfernt hat das eine Auswirkung auf das Magnetfeld, welche vom Hall-Sensor oder auch vom REED-Schalter erkannt wird und somit zur schaltenden Einwirkung im System führt. Diese Wirkung kann in unterschiedlicher Form als Hinweis an den Benutzer zurückgegeben werden, indem z.B. ein Tonsignal erklingt, ein Licht aufleuchtet oder auch als ein Hinweis auf dem Display des Schlüssels oder auch des Armaturenbretts.

Die mit der Erfindung erzielten Vorteile bestehen insbesondere darin, dass der Benutzer darauf hingewiesen wird, dass der Verschluss vom Gehäuse und/oder der mechanische Schlüssel aus dem elektronischen Schlüssel entfernt wurde. Schadhaften Einflüssen auf den elektronischen Schlüssel kann somit wirksam begegnet werden, indem der Benutzer auf einen fehlenden oder nicht korrekt angebrachten Verschluss aufmerksam gemacht wird. Wird beispielsweise nach dem Tankvorgang der Not- und/oder Tank-Schlüssel im Tankschloss vom Benutzer vergessen, wird dieser auf das Fehlen des Not- und/oder TankSchlüssels hingewiesen. Damit wird einem eventuellen Verlust des mechanischen Schlüssels wirksam vorgebeugt.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: einen elektronischen Schlüssel, der teilweise aufgeschnitten ist, und
- Fig. 2: eine Explosionsdarstellung des Schlüssels aus Fig. 1,

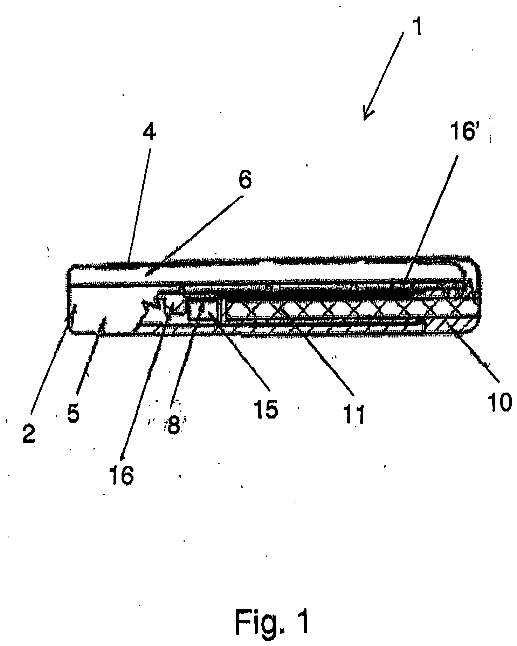

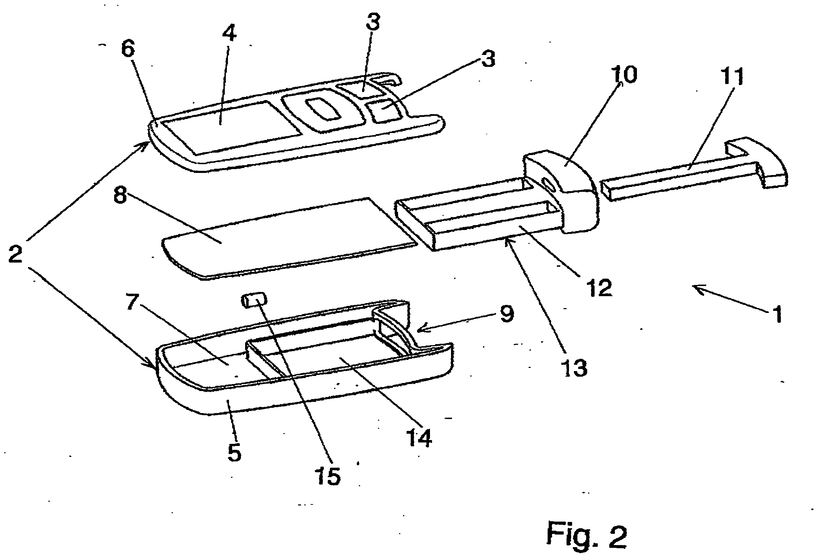

In Fig. 1 ist ein Schlüssel 1, und zwar ein elektronischer Schlüssel 1 für ein Schließsystem eines Kraftfahrzeugs zu sehen. Der Schlüssel 1 besitzt ein Gehäuse 2, an dem in Fig. 2 sichtbare tastenartige Betätigungsorgane 3 angeordnet sind, die zum Öffnen und/oder Schließen der Zentralverriegelung für die Autotüren in der Art einer Fernbedienung dienen. Desweiteren ist am Gehäuse 2 ein Display 4 als Anzeigeeinrichtung angeordnet, auf dem beispielsweise der jeweilige Schließzustand der Autotüren darstellbar ist.

Wie weiter der Fig. 2 zu entnehmen ist, besteht das Gehäuse 2 aus einer Unterschale 5 sowie einer Oberschale 6. Im Gehäuseinneren 7 des Gehäuses 2 befindet sich eine Leiterplatte 8, die zur Aufnahme der nicht weiter gezeigten Elektronik zum Betrieb des Schlüssels 1 dient. Die Elektronik ist von einer ebenfalls im Gehäuse 2 befindlichen Batterie mit Spannung versorgt. Zum Wechsel der Batterie ist das Gehäuse 2 mit einer Öffnung 9 versehen, die Zugang zum Gehäuseinneren 7 bietet. Die Öffnung 9 ist mit einem am Gehäuse 2 befestigbaren sowie abnehmbaren Verschluss 10 verschließbar.

Desweiteren besitzt der Schlüssel 1 einen mechanischen Schlüssel 11 zur Betätigung eines mechanischen Schlosses. Ein solches mechanisches Schloss kann beispielsweise an einer Autotüre zur Notöffnung angebracht sein, um den Zugang für den Benutzer zum Kraftfahrzeug auch bei leerer Batterie im Schlüssel 1 zu ermöglichen. Ebensogut kann das Tankschloss des Kraftfahrzeugs als mechanisches Schloss mittels des mechanischen Schlüssels 11 betätigbar sein. Der mechanische Schlüssel 11 ist im Gehäuse 2 herausnehmbar untergebracht. Hierzu besitzt der Verschluss 10 ein Trägerteil 12 für den mechanischen Schlüssel 11, wobei das Trägerteil 12 zusätzlich eine Halterung 13 für die Batterie aufweist. Das Trägerteil 12 ist in eine im Gehäuse 2 befindliche Aufnahme 14 mitsamt dem mechanischen Schlüssel 11 einführbar, so dass der mechanische Schlüssel 11 an der Öffnung 9 in die Aufnahme 14 einsteckbar ist Der meohanische Schlüssel 11 ist seinerseits am Verschluss 10 herausnehmbar befestigt.

Um zu erkennen, ob der mechanische Schlüssel 11 ordnungsgemäß im Gehäuse 2 beziehungsweise in der Aufnahme 14 befindlich ist, sind im Gehäuse 2 mit dem mechanischen Schlüssel 11 zusammenwirkende Mittel zur Detektion der Anwesenheit des mechanischen Schlüssels 11 im Gehäuse 2 beziehungsweise in der Aufnahme 14 angeordnet. Lässt der Benutzer beispielsweise den mechanischen Schlüssel 11 nach dem Betanken des Kraftfahrzeugs versehentlich im mechanischen Tankschloss stecken, so wird die Abwesenheit des mechanischen Schlüssels 11 vom elektronischen Schlüssel 1 entsprechend detektiert.

In einer näheren Ausgestaltung besteht der Schlüsselbart des mechanischen Schlüssels 11 aus einem magnetisierbaren Stahl, so dass der mechanische Schlüssel 11 ferromagnetisch ist. Die Mittel zur Detektion des mechanischen Schlüssels 11 bestehen aus einem Magneten 15 sowie einem Magnetsensor 16, wie anhand des aufgebrochenen Teils im Gehäuse 2 in Fig. 1 zu sehen ist Beim Magnetsensor 16 kann es sich beispielsweise um einen Hall-Sensor handeln. Der als Dauermagnet ausgestaltete Magnet 15 ist im Gehäuse 2 befindlich. Die im Gehäuse 2 befindliche Leiterplatte 8 dient weiterhin zur Aufnahme des Magnetsensors 16. Wird nun der ferromagnetische mechanische Schlüssel 11 aus dem Verschluss 10 und/oder aus der Aufnahme 14 und somit aus dem elektrischen Schlüssel 1 vom Benutzer entfernt, hat dies eine Auswirkung auf das vom Magneten 15 erzeugte Magnetfeld, welches vom Hall-Sensor 16 erkannt wird, da bei An- und/oder Ab der Anwesenheit und/oder Befestigung des Schlüsselteils im und/oder am Gehäuse (2) angeordnet wesenheit des mechanischen Schlüssels 11 dieser das vom Magneten 15 erzeugte Magnetfeld entsprechend verändert. Diese Auswirkung auf das Magnetfeld wird vom Hall-Sensor 16 entsprechend detektiert und führt somit zur dementsprechenden schaltenden Einwirkung im System des Schlüssels 1.

Ebenso kann auch der Verschluss 10 detektierbar ausgestaltet sein. Hierzu sind im Gehäuse 2 mit dem Verschluss 10 zusammenwirkende Mittel zur Detektion der Anwesenheit und/oder der korrekten Befestigung bzw. der Abwesenheit des Verschlusses 10 am Gehäuse 2 angeordnet. Diese Mittel zur Detektion des Verschlusses 10 bestehen wiederum aus einem am Verschluss 10 befindlichen Magneten sowie einem, auf der Leiterplatte 8 angeordneten, in Fig. 1 schematisch angedeuteten Magnet-Sensor 16'. Falls gewünscht kann der für die Detektion des mechanischen Schlüssels 11 benutzte Magnetsensor, beispielsweise der Hall-Sensor 16, auch für den Verschluss 10 Verwendung finden. Der nicht weiter gezeigte Magnet kann in den aus Kunststoff hergestellten Verschluss 10 eingespritzt oder in den Verschluss 10 eingelegt sein. Bevorzugt ist dabei, dass der Verschluss 10 aus magnetisierbarem Kunststoff gespritzt ist, womit der gesamte Verschluss 10 als Permanentmagnet wirkt. Anstelle eines Hall-Sensors 16, 16' kann als Magnetsensor auch ein REED-Schalter Verwendung finden.

Bei nicht in der Aufnahme 14 befindlichen mechanischen Schlüssel 11 und/oder bei nicht am Gehäuse 2 befindlichen Verschluss 10, was mit Hilfe des Magnetsensors 16, 16' detektiert wird, wird vom Schlüssel 1 ein entsprechender Hinweis für den Benutzer erzeugt. Dieser Hinweis wird dann beispielsweise in der Art eines Hinweistextes auf dem Display 4 des Schlüssels 1 ausgegeben. Selbstverständlich kann der Hinweis auch aus einem am Schlüssel 1 erklingenden Tonsignal, aus einem am Gehäuse 2 aufleuchtenden Licht, aus einer am Gehäuse 2 befindlichen aktivierbaren Symbolanzeige o. dgl. bestehen. Über eine entsprechende Kommunikation des Schlüssels 1 mit dem Kraftfahrzeug lässt sich der Hinweis auch am Armaturenbrett des Kraftfahrzeugs, beispielsweise im Kombiinstrument ausgeben.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann nicht nur die An- bzw. Abwesenheit des mechanischen Schlüssels 11 und des Verschlusses 10 sondern auch die An- bzw. Abwesenheit eines sonstigen Schlüsselteils detektiert werden. Desweiteren kann der erfindungsgemäße Schlüssel nicht nur als elektronischer Fahrzeugschlüssel bei Kraftfahrzeugen, sondern auch als Fernbedienung, Bedienelement o. dgl. bei beliebigen Schließsystemen, beispielsweise in der Gebäudetechnik, Verwendung finden.

### Bezugszeichen-Liste:

- 1:: Schlüssel
- 2:: Gehäuse
- 3:: Betätigungsorgan
- 4:: Display
- 5:: Unterschale
- 6:: Oberschale
- 7:: Gehäuseinneres
- 8:: Leiterplatte
- 9:: Öffnung
- 10:: Verschluss
- 11:: mechanischer Schlüssel
- 12:: Trägerteil
- 13:: Halterung
- 14:: Aufnahme
- 15:: Magnet
- 16,16':: Magnetsensor / Hallsensor

## Patentansprüche

1. Elektronischer Schlüssel (1) für ein Schließsystem eines Kraftfahrzeugs mit einer Batterie, mit einem Gehäuse (2), mit einer am Gehäuse (2) befindlichen Öffnung (9), mit einem an der Öffnung (9) im Gehäuse (2) aufnehmbaren und/oder am Gehäuse (2) befestigbaren sowie abnehmbaren Schlüsselteil, wobei es sich bei dem Schlüsselteil um einen mechanischen Schlüssel (11) zur Betätigung eines mechanischen Schlosses handelt, wobei der mechanische Schlüssel (11) im Gehäuse (2) aufnehmbar sowie herausnehmbar ist, mit einem weiteren Schlüsselteil, wobei es sich bei dem weiteren Schlüsselteil um einen Verschluss (10) handelt, wobei die Öffnung (9) am Gehäuse (2) mittels des am Gehäuse (2) befestigbaren sowie abnehmbaren Verschlusses (10) verschließbar ist, mit im Gehäuse (2) angeordneten, mit dem Schlüsselteil zusammenwirkenden Mitteln zur Detektion der Anwesenheit und/oder Befestigung des Schlüsselteils im und/oder am Gehäuse (2), mit im Gehäuse (2) angeordneten, mit dem Verschluss (10) zusammenwirkenden Mitteln zur Detektion der Anwesenheit und/oder der korrekten Befestigung des Verschluss (10) am Gehäuse (2), und mit Mitteln zur Erzeugung eines Hinweises bei nicht im Gehäuse (2) befindlichem mechanischen Schlüssel (11) und/oder bei nicht am Gehäuse (2) befindlichem Verschluss (10), **dadurch gekennzeichnet, dass** der Verschluss (10) ein Trägerteil (12) für den mechanischen Schlüssel (11) umfasst, dass das Trägerteil (12) eine Halterung (13) für die Batterie aufweist, dass das Trägerteil (12) in eine im Gehäuse befindliche Aufnahme (14) mitsamt dem mechanischen Schlüssel (11) einführbar ist, so dass der mechanische Schlüssel an der Öffnung in die Aufnahme (14) einsteckbar ist und der mechanische Schlüssel (11) am Verschluss (10) herausnehmbar befestigbar ist, dass der mechanische Schlüssel (11) ferromagnetisch ist, dass die Mittel zur Detektion des mechanischen Schlüssels (11) aus einem im Gehäuse (2) befindlichen Magneten (15) sowie einem Magnetsensor (16) bestehen, und dass die Mittel zur Detektion des Verschlusses (10) aus einem weiteren Magneten sowie einem Magnetsensor (16') bestehen, wobei der weitere Magnet am Verschluss (10) befindlich ist.

2. Schlüssel nach Anspruch 1, **dadurch gekennzeichnet, dass** im Gehäuse (2) eine Leiterplatte (8) zur Aufnahme des Magnetsensors (16, 16') angeordnet ist.

3. Schlüssel nach einem der Ansprüche 1 bis 2, **dadurch gekennzeichnet, dass** der weitere Magnet in den Verschluss (10) eingespritzt, in den Verschluss (10) eingelegt oder der Verschluss (10) aus magnetisierbarem Kunststoff gespritzt ist.

4. Schlüssel nach einem der Ansprüche 1 bis 3, **dadurch gekennzeichnet, dass** der Magnetsensor (16, 16') aus einem Hall-Sensor oder einem REED-Schalter besteht.

5. Schlüssel nach einem der Ansprüche 1 bis 4, **dadurch gekennzeichnet, dass** es sich bei dem Hinweis um ein erklingendes Tonsignal, ein aufleuchtendes Licht, eine Symbolanzeige oder einen Hinweistext handelt.

6. Schlüssel nach einem der Ansprüche 1 bis 5, **dadurch gekennzeichnet, dass** der Hinweis auf einem Display (4) des Schlüssels (1) und/oder am Armaturenbrett des Kraftfahrzeugs ausgegeben wird.

## Claims

1. An electronic key (1) for a locking system of a motor vehicle, comprising a battery, comprising a housing (2), having an opening (9) on the housing (2), comprising a key part that can be received in the opening (9) in the housing (2) and/or can be attached to and removed from the housing (2), the key part being a mechanical key (11) for actuating a mechanical lock, wherein the mechanical lock (11) can be received in and removed from the housing (2), comprising a further key part, wherein the further key part is a closure (10), wherein the opening (9) on the housing (2) can be closed by means of the closure (10) which can be attached to or removed from the housing (2), comprising, arranged in the housing (2) and interacting with the key part, means for detecting the presence and/or attachment of the key part in the and/or on the housing (2), with means arranged in the housing (2) and interacting with the closure (10) for detecting the presence and/or the correct attachment of the closure (10) on the housing (2), and comprising means for generating an indication when the mechanical key (11) is not in the housing (2) and/or when the closure (10) is not on the housing (2), **characterised in that** the closure (10) comprises a carrier part (12) for the mechanical key (11), **in that** the carrier part (12) comprises a holder (13) for the battery, **in that** the carrier part (12) together with the mechanical key (11) can be introduced into a socket (14) in the housing, such that the mechanical key can be inserted at the opening into the slot (14) and the mechanical key (11) can be removably attached to the closure (10), **in that** the mechanical key (11) is ferromagnetic, **in that** the means for detecting the mechanical key (11) consist of a magnet (15) located in the housing (2) as well as a magnet sensor (16), and **in that** the means for detecting the closure (10) consists of a further magnet as well as a magnet sensor (16'), wherein the further magnet is located on the closure (10).

2. The key according to claim 1, **characterised in that** a circuit board (8) is located in the housing (2), in order to receive the magnet sensor (16, 16').

3. The key according to one of claims 1 to 2, **characterised in that** the further magnet is injected in the closure (10), inserted in the closure (10), or the closure (10) is injection moulded from magnetisable plastic.

4. The key according to one of claims 1 to 3, **characterised in that** the magnet sensor (16, 16') consists of a Hall sensor or a reed switch.

5. The key according to one of claims 1 to 4, **characterised in that** the indication is a sound signal, a lighting up light, a symbol display or a warning text.

6. The key according to one of claims 1 to 5, **characterised in that** the indication is given on a display (4) of the key (1) and/or on the dashboard of the vehicle.

## Revendications

1. Clé électronique (1) pour un système de fermeture d'un véhicule automobile comprenant une batterie, un boîtier (2), une ouverture (9) se trouvant dans le boîtier (2), une partie de clé pouvant être logée dans l'ouverture (9) du boîtier (2) et/ou pouvant être fixée et retirée sur le boîtier (2), la partie de clé étant une clé mécanique (11) servant à actionner une serrure mécanique, la clé mécanique (11) pouvant être logée dans le boîtier (2) et retirée de celui-ci, comprenant une autre partie de clé, l'autre partie de clé étant une fermeture (10), l'ouverture (9) du boîtier (2) pouvant être fermée au moyen de la fermeture (10) pouvant être fixée et retirée sur le boîtier (2), comprenant des moyens de détection de la présence et/ou de la fixation de la partie de clé dans et/ou sur le boîtier coopérant avec la partie de clé, disposés dans le boîtier (2), comprenant des moyens de détection de la présence et/ou de la fixation correcte de la fermeture (10) sur le boîtier (2) coopérant avec la fermeture, disposés dans le boîtier (2), et comprenant des moyens servant à générer une indication lorsque la clé mécanique (11) ne se trouve pas dans le boîtier (2) et/ou lorsque la fermeture ne se trouve pas sur le boîtier (2), **caractérisée en ce que** la fermeture (10) comprend une partie support (12) pour la clé mécanique (11), **en ce que** la partie support (12) présente un élément de retenue (13) pour la batterie, **en ce que** la partie support (12) peut être introduite conjointement avec la clé mécanique (11) dans un logement (14) se trouvant dans le boîtier, de sorte que la clé mécanique dans l'ouverture puisse être insérée dans le logement (14) et la clé mécanique (11) puisse être fixée amovible sur la fermeture (10), que la clé mécanique (11) soit ferromagnétique, que les moyens de détection de la clé mécanique (11) soient constitués d'aimants (15) se trouvant dans le boîtier (2) et d'un capteur magnétique (16), et que les moyens de détection de la fermeture (10) soient constitués d'un autre aimant et d'un capteur magnétique (16'), l'autre aimant se trouvant sur la fermeture (10).

2. Clé selon la revendication 1, **caractérisée en ce qu'**une carte de circuit imprimé (8) servant de logement au capteur magnétique (16, 16') est disposée dans le boîtier (2).

3. Clé selon l'une des revendications 1 à 2, **caractérisée en ce que** l'autre aimant est moulé par injection dans la fermeture (10), est inséré dans la fermeture (10) ou la fermeture (10) est moulée par injection dans un plastique magnétisable.

4. Clé selon l'une des revendications 1 à 3, **caractérisée en ce que** le capteur magnétique (16, 16') est constitué d'un capteur à effet Hall ou d'un commutateur REED.

5. Clé selon l'une des revendications 1 à 4, **caractérisée en ce que** l'indication est un signal sonore qui retentit, une lumière qui s'illumine, un affichage de symbole ou un texte d'indication.

6. Clé selon l'une des revendications 1 à 5, **caractérisée en ce que** l'indication est affichée sur un écran (4) de la clé (1) et/ou sur le tableau de bord du véhicule automobile.
